# EUROPEAN PATENT SPECIFICATION

(11) **EP 2 152 015 B1**
(45) Date of publication and mention of the grant of the patent: **15.05.2013**
(21) Application number: 09425309.3
(22) Date of filing: 31.07.2009
(51) Int. Cl.: H04Q 1/14, H01R 9/24

(54) **Termination strip for telephone cables, in particular IDC strip, integrated with an access module**
Anschlussleiste für Fernsprechkabel, insbesondere Anschlussleiste mit Isolationsverdrängungsklemmen, mit eingegliedertem Zugriffsmodul.
Réglette de connexion pour câbles téléphoniques, en particulier réglette à contact autodénudant, intégrée avec un module d'accès.

(30) Priority: 06.08.2008 IT RM20080435
(43) Date of publication of application: 10.02.2010
(73) Proprietor: C.I.S. Sud s.r.l., 00040 Ariccia (RM) (IT)
(72) Inventor: Bernardini, Giuseppe, 00040 Ariccia (Roma) (IT)
(74) Representative: Santi, Filippo

(56) References cited:
- EP-A- 1 781 047
- DE-A1- 2 901 766
- US-A1- 2004 242 081

## Description

The present invention concerns a telephone cable termination module, in particular an IDC strip, integrated with an access module.

The invention refers to the field of applications for telecommunications and in particular to the field of telephone communication and specifically concerns the termination of telephone cables made of copper.

According to the prior art, the telephone electric circuit connecting every single telephone private line to the telephone main station is constituted by two insulated conductors made of copper, the so called couple, covered with a suitable insulating material all along their length. This kind of circuit was designed and is particularly suitable for transmitting a so called "telephone channel", i.e. the transmission of a simple signal and/or the conversation of the voice of two users.

At present, however, telephone providers are functionally reconsidering their network of copper cables, as a consequence of the need of using the same circuit to transmit a more and more increasing amount of information. For this reason in the last years all the producers of transmitting apparatuses started developing technologies that, using numeric systems for their transmissions and dealing with the different complex signals by means of cuts, compressions and regenerations, allow for the realisation of high transmitting capacity apparatuses that can even use the telephone couple made in copper.

At present, the technology named ADSL (Asymmetric Digital Subscriber Line) is much exploited and very common. The peculiarity of ADSL technology is the possibility of using it without any need to change existing telephone cables and without any need to use separate lines for data and normal voice-communications: in fact, on the same telephone couple made of copper, it is possible to pass at the same time both digital data and the analogical telephone signal, since these two signals use different bands: in fact, voice signal uses frequencies comprised between 300 and 3400 Hz, while data are transmitted through frequencies higher than 4 kHz.

However the use of this technology implies the need for having an automatic system of remote measure, which can control with precision the transmission physical parameters of the lines and/or couples, on which this large band systems are transmitted.

It is known that telephone couples made of copper depart all together from the telephone main stations and reach separately the different users. In the main station, the telephone couples end on termination or routing modules, defined IDC strip (the acronym standing for the expression "insulation displacement connection", denoting a particular kind of connection with insulating dislocation), and from there are routed to the main station transmitting apparatuses, as specified in the European patent application No. EP1781047, in the name of the same Applicant.

The need for having an automatic system of remote measure makes therefore necessary to accede with a measuring apparatus to the couples of the IDC termination strips.

In order to make it possible automatically and from a "common peripheral platform", it is provided, according to the prior art, an "access module" giving access to the conductors couples made of copper already positioned in the IDC termination strips, respectively on the side towards the users and on the side towards the main station, and allowing the access of the measuring apparatus on the different selected sides.

Thus, in general, a system of remote measure, commonly named "Line Testing", provides for a remote control apparatus, a local measure apparatus and a module for accessing the module of termination of the couples.

The module for accessing the termination module is particularly important and becomes the characterising element of the measuring complex as a whole. The access module is located in correspondence of the strip and must adapt to IDC strip in a compact way, mechanically stable and possibly removable in a simple way, as further specified in the Italian patent applications N. RM2005U000023 and RM2005A000651, in the name of the same Applicant .

As a matter of fact, however, however the access module is harmonised with the strip, during the exercise various inconveniences may occur.

For example, the access module can be located on the front of the strip and therefore must be removed each time it is necessary to renew a multiplexing (i.e. each time a user changes its position) and every time it is necessary, for any reason, to accede to the strip manually on the front part.

In another case, if the access module is positioned on a side of the strip, the overall dimensions of the assembly are increased and it is much more difficult to work by hand in the middle of two adjacent strips in order to move the multiplexings, since in the telephone main station the room of the frame between two strips always has the same size.

Thus, in these conditions, each time the strip undergoes an intervention it is necessary to remove the access module.

A third drawback must still be considered, occurring more and more frequently in a telephone main station when not quite qualified workers intervene and for some particular reasons or for inaccuracy remove the access module and do not put it back in place.

Said drawbacks all bring to the same result, that of put the Line Testing system out of order and therefore make it necessary a costly local maintenance intervention, or an intervention directly at the main station.

In this context it is proposed the solution according to the present invention, providing for an IDC strip integrated with its access module, arranged inside the strip, so that it is not accessible from the outside, with the purpose of solving all the above mentioned drawbacks and, in particular, involving the following advantages:
- simplifying the connection means between access module and IDC strip,
- giving stability and reliability (since a simple and compact single product is realised),
- reducing the dimensions with respect to a traditional IDC strip.

These and other results are realised according to according to the present invention by providing for a telephone cable termination module, in particular an IDC strip, realised in a way it can integrate within its structure, and more precisely in correspondence of its support structure, an access module.

The purpose of the present invention is therefore that of realising a termination module allowing for overcoming the limitations of the solutions according to the prior art and for obtaining the previously described technical results.

A further aim of the invention is that said termination module can be realised with substantially reduced costs, as far as both production costs and operation costs is concerned.

Not least purpose of the invention is that of realising an IDC termination module that is substantially simple, safe and reliable.

The present invention is a telephone cable termination module, in particular an IDC strip, comprising at least one packet, positioned on a support structure, and covered by a box-lid, on which a plurality of connectors are arranged, thus forming two facing rows, each connector of each row interfacing with a connector of the facing row, thus forming a couple, wherein the cables of conductors coming from the telephone private lines and the respective cables coming from the telephone main station entering the module from opposed sides of each packet and can be led for being connected towards the front part of said packet respectively in correspondence of the connectors of one of the two rows, wherein each connector is constituted by two elements: a first element for the connection with a cable and a curved second element for the connection with a corresponding curved element of the other connector of the couple, all the connectors of only one of said rows being obtained by welding the respective two elements together, the elements of the connectors of the facing row being maintained physically separated and being connected, by means of an electronic circuit, connected in its turn, by through contacts it is provided of, with a common electronic circuit of the strip, provided with corresponding contacts, physically integrated and sustained by the support structure.

Preferably, according to the invention, said common electronic circuit is removable and said support structure can be coupled to a frame for fixing the module to the frame of main station exchanger and can be opened.

In particular, according to the invention, said openable coupling is obtained by means of a hinge between said support structure and said frame, preferably obtained on the side of the strip where the telephone private lines arrive, and the opening is realised on the opposed side.

The present invention will be described, for illustrative non-limitative purpose, according to a preferred embodiment, in particular with reference to the figures of the enclosed drawings, wherein:
- figure 1 shows a perspective view of a termination module for telephone cables made of copper, in particular an IDC strip, according to the present invention,
- figure 2 shows a lateral view of the contacts of a packet of the termination module of figure 1,
- figure 3 shows a perspective view of the contacts of a packet of the termination module of figure 1, and an interposed electronic circuit,
- figure 4 shows a perspective exploded view of the components of the contacts of a packet of the termination module of figure 1,
- figure 5 shows a perspective view of a packet of the termination module of figure 1, wherein the relative contacts and the interposed electronic circuit are located,
- figure 6 shows a perspective view of the packet of figure 5, in its box-lid,
- figure 7 shows a perspective view of the support structure of the termination module of figure 1, on which a packet 3 is arranged, and
- figure 8 shows a perspective view of the termination module of figure 1, hinged on a frame, in an open position.

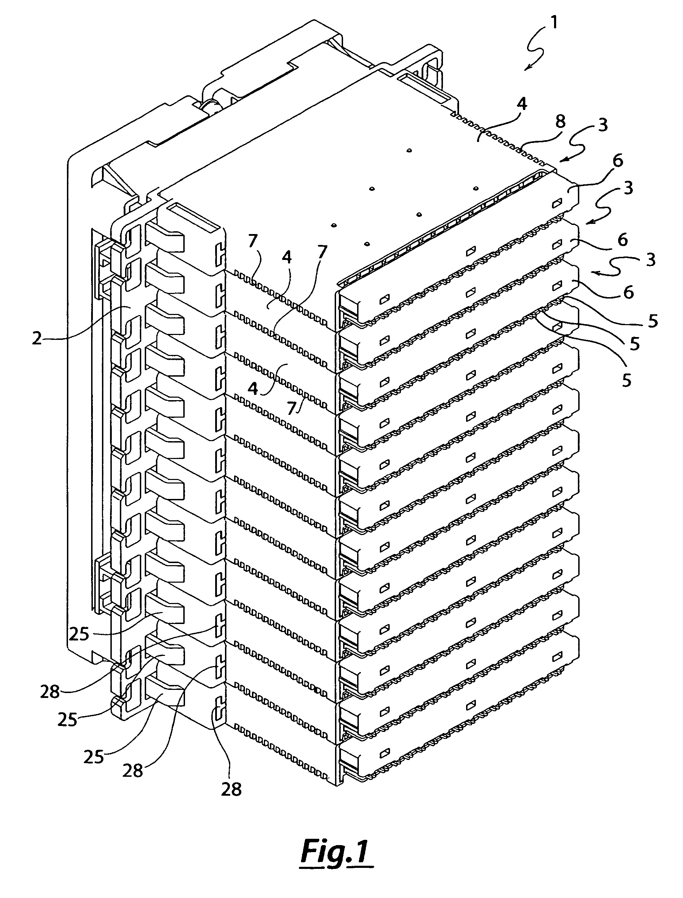

Making reference to figure 1, it is shown a compact IDC strip with 96 couples according to the present invention, indicated as a whole with the numeric reference 1, made of a plurality of elements, in particular a support structure 2, on which a plurality of packets 3 is arranged, inside respective box-lids 4. On the strip 1 shown, the most forward portions of connectors 5 on the side of the telephone main station are also visible, in the case shown located under the correspondent and mirrored connectors on the side of the telephone private lines (not shown since they are covered by the pertinent frontal masks 6) realising the contact of each couple of cables on the side of the telephone private lines and on the side of the telephone main station. Further, the figure shows, for each box-lid 4, the openings 7 for the inlet of the cables coming, in the case shown, from the telephone private lines, while the cables coming from the telephone main station enters the strip 1 through correspondent openings 8 on the opposite side of each box-lid 4. It is to be understood that, if in this case the cables on the side of the telephone private lines arrive to the strip 1 on its left side while the cables on the side of the telephone main station arrive to its right side, nothing prevent from inverting such a geometric configuration, that is that the cables on the side of the telephone private lines arrive to the strip 1 on its right side while the cables on the side of the telephone main station arrive to its left side.

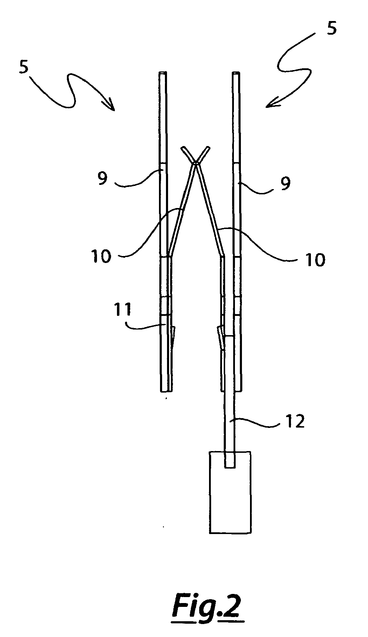

In particular, with reference to figure 2, the contacts of a packet of an IDC strip are configured as two connectors 5 facing each other, one for each linked wire of a couple. Each connector 5 is constituted by two elements: a straight element 9 connecting the wire and a curved element 10 representing the contact spring.

In one of the two connectors 5, the two elements 9 and 10 are linked together by welding in a zone 11 of the same connector, according to the prior art, while in the other, between the two elements 9 and 10 is introduced in a stable way the access module 12, simply sketched in figure 2.

The disposition of a wire of the examined contact is repeated for all the wires of the couples of a packet 3.

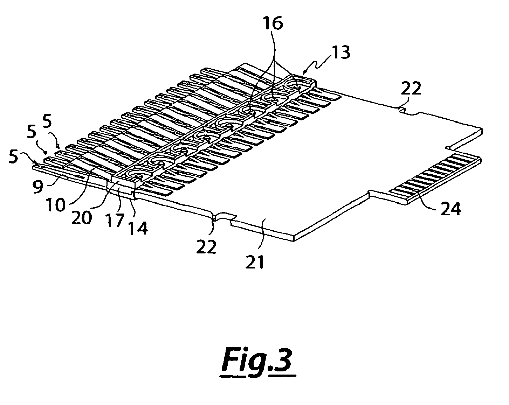

Figure 3 shows in perspective the assembly of connectors 5 belonging to a single packet, amongst which the access module 12 is introduced.

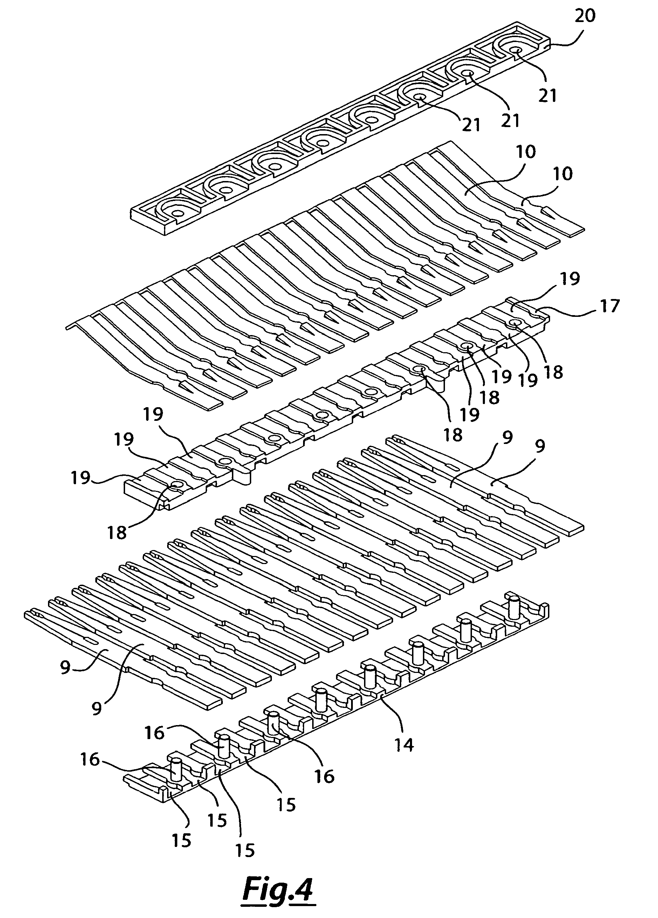

Figure 4 shows separately the different components making possible the disposition of the connectors shown with reference to figure 3. With reference to figures 3 and 4, it is shown a spacer 13 made of a non electrically conductive material, preferably of plastics, constituted by a first part 14 presenting a plurality of seats 15 made for housing the straight element 9 of the contact and a plurality of pins 16 for coupling with the remaining parts of the same spacer 13.

On said first part 14 is then positioned a second part 17, provided with a plurality of holes 18 for the insertion of the pins 16 of said first part 14, fixing in position all the straight elements 9 of the connectors 5 and in its turn presenting a plurality of seats 19 for housing the curved element 10 of the connectors 5.

Lastly, on said second part 17 is positioned a third part 20, also provided with a plurality of holes 21 for the insertion with the pins 16 of said first part 14, fixing in position all the curved elements 10 of the connectors 5, and further assuring the coupling of the different parts 14, 17, 20 of the spacer 13.

Figure 3 further shows an electronic circuit 21 (o as an alternative a printed circuit) of a packet, with a plurality of trails, with the relative contacts 24, introduced amongst the separated parts of the connectors, welding them respectively in correspondence of the correspondent trails.

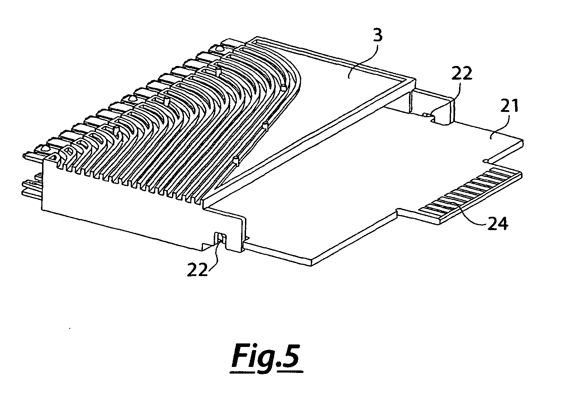

With reference to figure 5, the assembly constituted by the contacts of the packet of the termination module and by the relative interposed electronic circuit is introduced within the packet 3 through its rear part, and is firmly coupled with it by means of a system of matching tongues 22.

On the contrary, the correspondent connectors 5 of the known type, with the two elements 9 and 10 directly welded together are introduced into the packet 3 from the front side, as according to the prior art.

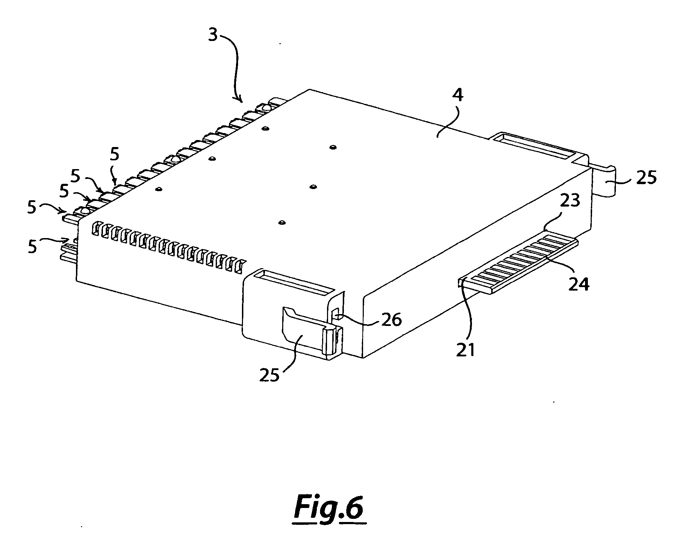

With reference to figure 6, the packet 3 with connectors completely positioned is introduced within a box-lid 4, provided with a rear opening 23 for the passage of the contacts 24 of the electronic circuit 21, so that the front part appears as that of a packet of an IDC strip of the known kind, wherein all the coupled connectors are present, whereas the contacts 24 of the electronic circuit 21 of the packet are present on the rear part.

The box-lid 4 is further provided with resilient tongues 25 and openings 26.

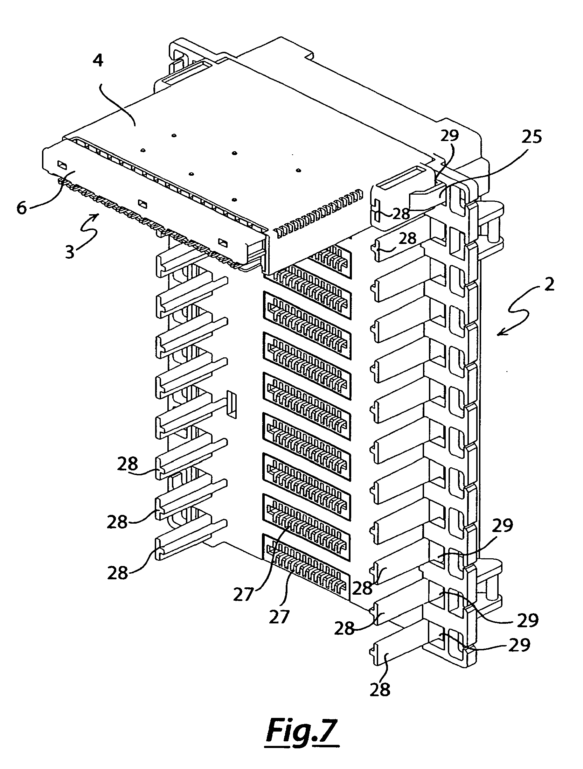

Figure 7 shows the support structure 2, on which a packet 3 is applied. The support structure 2 also supports a common electronic circuit 32, provided with a plurality of contacts 27 for the connection with the contacts 24 of the electronic circuit 21 of each packet 3. Further, the support structure 2 comprises protruding means 28 for the insertion into the openings 26 of each box-lid 4 and a plurality of openings 29 for the insertion of the resilient tongues 25 of each box-lid 4.

The common electronic circuit 32, together with the electronic circuits of the packet, to which it is electronically connected by means of its contacts 27 and the contacts 24 of the electronic circuit 21 of each packet 3, takes the place of the access module of the IDC termination module, also performing all the same functions.

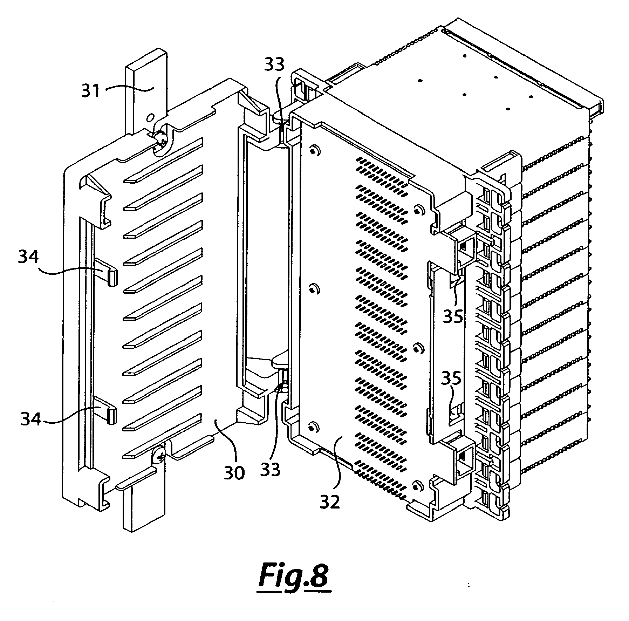

Lastly, with reference to figure 8, the support structure 2 is completed by a frame 30, also acting in order to fix the IDC strip to the frame of the main station del multiplexer, represented by the metallic bar 31. The frame 30 is coupled with the rest of the support structure 2 by means of the hinges 33 allowing for the rotation from a closed position, where the support structure 2 rests on the rear of the frame 30 and is maintained in this position by resilient tongues 34 of the frame coupling with correspondent slots 35 of the support structure 2, and an open position, shown in figure, allowing for the access to the common electronic circuit 32 and the possible replacement of the same during maintenance.

The hinges 33 are preferably realised on the side of the multiplexings and/or clients, whereas the opening is on the opposed side, where the cable coming from the apparatus has a standard overlength allowing the operation without detaching the wires of the functioning terminations of the IDC strip.

Preferably, all the components of the IDC strip, with the exception of the metallic contacts realising the operation of the same, are made of a thermoplastic material.

Further, the IDC strip of the present invention is realised so to have the main dimensions of height and width that correspond to those of an IDC strip of the known kind and to present, as a finished product, the same configuration, in order to make it possible to install it in a telephone main station using the same components already present.

The present invention was described for illustrative non-limitative purpose, according to its preferred embodiment, but it must be understood that changes and/or modifications can be made by the skilled in the art without for this reason escaping the relative scope of protection, as defined by the enclosed claims.

## Claims

1. Telephone cable termination module (1), in particular IDC strip, comprising at least one packet (3), positioned on a support structure (2), and covered by a box-lid (4), on which a plurality of connectors (5) are arranged thus forming two facing rows, each connector (5) of each row interfacing with a connector (5) of the facing row thus forming a couple, wherein cables of conductors coming from telephone private lines and respective cables coming from a main station can enter the module from opposed sides of each packet (3) and can be led for being connected towards the front portion of said packet (3) respectively in correspondence of the connectors (5) of one of the two rows, each connector (5) being constituted by two elements: a first element (9) for the connection with a cable and a curved second element (10) for the connection with a corresponding curved element (10) of the other connector (5) of the couple, the termination module being **characterised in that** all the connectors (5) of only one of said rows are obtained by welding the respective two elements (9, 10) together, the elements (9, 10) of the connectors (5) of the facing row being maintained physically separated and being connected by means of an electronic circuit (21), connected in its turn, through contacts (24) it is provided of, with a common electronic circuit (32) of the termination module, provided with corresponding contacts (27), physically integrated and sustained by the support structure (2).

2. Telephone cable termination module (1) according to claim 1, **characterised in that** said common electronic circuit (32) is removable.

3. Telephone cable termination module (1) according to claim 1 or 2, **characterised in that** said support structure (2) is coupled to a frame (30) for fixing the module to the frame (31) of main station exchanger and can be opened.

4. Telephone cable termination module according to claim 3, **characterised in that** said openable coupling is obtained by means of a hinge between said support structure (2) and said frame (30).

5. Telephone cable termination module according to claim 4, **characterised in that** said hinge is obtained on the side of the strip where the telephone private lines arrive, and the opening is realised on the opposed side.

## Patentansprüche

1. Telefonkabelabschlussmodul (1), insbesondere IDC-Streifen, umfassend mindestens ein Paket (3), das auf einer Stützstruktur (2) angeordnet und von einem Kastendeckel (4) abgedeckt ist, auf dem eine Vielzahl von Anschlüssen (5) angeordnet sind, so dass sie zwei gegenüber liegende Reihen bilden, wobei jeder Anschluss (5) von jeder Reihe eine Schnittstelle bildet mit einem Anschluss (5) der gegenüber liegenden Reihe und so ein Paar bildet, wobei von privaten Telefonleitungen kommende Anschlusskabel beziehungsweise von einer Hauptstation kommende Kabel von gegenüber liegenden Seiten jedes Pakets (3) in das Modul eintreten können und verlegt werden können zur Verbindung in Richtung des Frontabschnitts des Pakets (3) beziehungsweise der Anschlüsse (5) von einer der beiden Reihen, wobei jeder Anschluss (5) aus zwei Elementen besteht: einem ersten Element (9) für die Verbindung mit einem Kabel und einem gekrümmten zweiten Element (10) für die Verbindung mit einem entsprechenden gekrümmten Element (10) des anderen Anschlusses (5) des Paares, wobei das Abschlussmodul **dadurch gekennzeichnet ist, dass** alle Anschlüsse (5) von nur einer der Reihen erhalten werden durch zusammenschweißen der jeweiligen zwei Elemente (9, 10), wobei die Elemente (9, 10) der Anschlüsse (5) der gegenüber liegenden Reihe physikalisch getrennt beibehalten und mittels einer elektronischen Schaltung (21) angeschlossen werden, die wiederum durch Kontakte (24), mit denen sie versehen ist, mit einer gemeinsamen elektronischen Schaltung (32) des Abschlussmoduls verbunden ist, die mit entsprechenden Kontakten (27) versehen ist, die physikalisch mit der Stützstruktur (2) integriert und gehalten sind.

2. Telefonkabelabschlussmodul (1) gemäß Anspruch 1, **dadurch gekennzeichnet, dass** die gemeinsame elektronische Schaltung (32) entfernbar ist.

3. Telefonkabelabschlussmodul (1) gemäß Anspruch 1 oder 2, **dadurch gekennzeichnet, dass** die Stützstruktur (2) mit einem Rahmen (30) verbunden ist zum Befestigen des Moduls an dem Rahmen (31) des Hauptstationsaustauschers und geöffnet werden kann.

4. Telefonkabelabschlussmodul gemäß Anspruch 3, **dadurch gekennzeichnet, dass** die zu öffnende Verbindung erhältlich ist durch Mittel eines Gelenks zwischen der Stützstruktur (2) und dem Rahmen (30).

5. Telefonkabelabschlussmodul gemäß Anspruch 4, **dadurch gekennzeichnet, dass** das Gelenk erhältlich ist auf der Seite des Streifens, wo die privaten Telefonleitungen ankommen, und die Öffnung an der gegenüber liegenden Seite realisiert ist.

## Revendications

1. Module de raccordement de câble téléphonique (1), en particulier une réglette IDC, comprenant au moins un paquet (3), positionné sur une structure de support (2), et recouvert d'un couvercle formant boîte (4), sur lequel est disposée une pluralité de connecteurs (5) formant ainsi deux rangées en regard l'une de l'autre, chaque connecteur (5) de chaque rangée étant relié à un connecteur (5) de la rangée en regard en formant ainsi un couple, dans lequel des câbles de conducteurs provenant de lignes téléphoniques privées et des câbles respectifs provenant d'une station principale peuvent pénétrer dans le module par des côtés opposés de chaque paquet (3) et peuvent être menés de façon à être connectés vers la partie avant dudit paquet (3), en correspondance, respectivement, des connecteurs (5) de l'une des deux rangées, chaque connecteur (5) étant constitué de deux éléments : un premier élément (9) pour la connexion avec un câble et un deuxième élément courbe (10) pour la connexion à un élément courbe correspondant (10) de l'autre connecteur (5) du couple, le module de raccordement étant **caractérisé en ce que** tous les connecteurs (5) d'une seule desdites rangées sont obtenus par soudage des deux éléments respectifs (9, 10) l'un à l'autre, les éléments (9, 10) des connecteurs (5) de la rangée en regard étant maintenus physiquement séparés et étant connectés au moyen d'un circuit électronique (21), lui-même connecté, à travers des contacts (24) dont il est pourvu, à un circuit électronique commun (32) du module de raccordement, pourvu de contacts correspondants (27), physiquement intégrés et soutenus par la structure de support (2).

2. Module de raccordement de câble téléphonique (1) selon la revendication 1, **caractérisé en ce que** ledit circuit électronique commun (32) est amovible.

3. Module de raccordement de câble téléphonique (1) selon la revendication 1 ou 2, **caractérisé en ce que** ladite structure de support (2) est couplée à un châssis (30) pour la fixation du module au châssis (31) de l'échangeur de la station principale et peut être ouverte.

4. Module de raccordement de câble téléphonique selon la revendication 3, **caractérisé en ce que** ledit couplage ouvrable est obtenu au moyen d'une charnière entre ladite structure de support (2) et ledit châssis (30).

5. Module de raccordement de câble téléphonique selon la revendication 4, **caractérisé en ce que** ladite charnière est obtenue sur la face de la réglette sur laquelle arrivent les lignes téléphoniques privées, et l'ouverture est réalisée sur le côté opposé.
